# EUROPEAN PATENT APPLICATION

(11) **EP 4 517 894 A1**
(43) Date of publication of application: **05.03.2025**
(21) Application number: 24192224.4
(22) Date of filing: 01.08.2024
(51) Int. Cl.: H01M 10/04, H01M 50/107, H01M 50/152, H01M 50/159, H01M 50/342

(54) **CYLINDRICAL SECONDARY BATTERY**

(30) Priority: 31.08.2023 KR 20230115069
(71) Applicant: SAMSUNG SDI CO., LTD., Giheung-gu Yongin-si, Gyeonggi-do 17084 (KR)
(72) Inventor: Chun, Kwan Sic, 17084 Yongin-si, Gyeonggi-do (KR); Kim, Myung Seob, 17084 Yongin-si, Gyeonggi-do (KR)
(74) Representative: Gulde & Partner

(57) **Abstract**

A cylindrical secondary battery includes: an electrode assembly; a case of which a lower end is open to accommodate the electrode assembly; and a cap plate coupled to the lower end of the case, wherein the cap plate includes a central area, an edge area and a connection area connecting the central area and an edge area, a vent is located in at least one of the central area and the connection area and an area of the cap plate in which the vent is formed has a smaller thickness than other areas.

## Description

### BACKGROUND

### 1. Field

Aspects of some embodiments of the present disclosure relate to a cylindrical secondary battery.

### 2. Description of the Related Art

Secondary batteries are batteries that can be charged and discharged, unlike primary batteries that cannot be recharged. Low-capacity secondary batteries are used in small and portable electronic devices such as smartphones, feature phones, tablet computers, notebook computers, digital cameras, and camcorders, while high-capacity secondary batteries are widely used as batteries for driving motors and storing power in hybrid vehicles, electric vehicles, etc.

Such secondary batteries may be classified into cylindrical, prismatic, pouch, etc., depending on their appearance. Among them, a cylindrical secondary battery typically includes an electrode assembly, a can, a cap assembly, etc., and has a structure in which the electrode assembly is inserted into the can, a beading part is formed, the cap assembly is installed thereon, and a crimping part is formed and fixed.

Additionally, the cap assembly is formed with a current interrupt device (CID) capable of blocking a current when an abnormality occurs in the secondary battery. For example, during forced discharge evaluation, the CID of the cap assembly operates to block the current, thereby preventing or reducing the secondary battery from igniting or exploding. However, in the case of a cylindrical secondary battery without the CID, there is no current blocking function to suppress heat generation. Therefore, there is a need to develop a new secondary battery structure that can satisfy forced discharge conditions corresponding to specific standards.

The above information disclosed in this Background section is only for enhancement of understanding of the background and therefore the information discussed in this Background section does not necessarily constitute prior art.

### SUMMARY

The invention is defined by the appended claims.

Aspects of some embodiments of the present disclosure include a cylindrical secondary battery with a relatively improved structure for forced discharge characteristics.

According to some embodiments of the present disclosure, a cylindrical secondary battery includes an electrode assembly, a case of which a lower end is open to accommodate the electrode assembly, and a cap plate coupled to the lower end of the case, wherein the cap plate includes a central area, an edge area and a connection area connecting the central area and the edge area, a vent is located in at least one of the central area and the connection area, and an area of the cap plate in which the vent is formed has a smaller thickness than other areas of the cap plate.

According to some embodiments, the cap plate may be formed in a shape in which the central area is curved toward the electrode assembly compared to the edge area.

According to some embodiments, the central area and the connection area of the cap plate may be formed concavely toward an inside of the case compared to the edge area.

According to some embodiments, the vent may have a notch formed in an inner surface of the cap plate.

According to some embodiments, a thickness of the cap plate in the area in which the vent is formed may be 0.1 to 0.3 times a thickness of a material of the cap plate.

According to some embodiments, the vent is provided in the central area of the cap plate and may have a circular ring shape continuously formed along a circumference of the central area of the cap plate.

According to some embodiments, an inner diameter of the vent may be 0.5 to 1 times a core diameter of the electrode assembly.

According to some embodiments, the vent may be provided in the central area and the connection area of the cap plate and may have a cross shape extending from a center of the cap plate toward the connection area.

According to some embodiments, a length of each of a horizontal line and a vertical line of the vent may be 0.5 to 5.5 times the core diameter of the electrode assembly.

According to some embodiments, the vent may be provided in the connection area and may have at least one linear-shaped vent extending from the central area.

According to some embodiments, the vent is composed of a plurality of linear-shaped vents, and the plurality of linear-shaped vents may be formed to be spaced apart from each other based on the central area.

According to some embodiments, the vent is composed of a plurality of linear-shaped vents, and lengths of the plurality of linear-shaped vents may be formed different from each other.

According to some embodiments, a length of a relatively long linear-shaped vent of the plurality of linear-shaped vents may be about 1 to 10 times a length of a relatively short linear-shaped vent thereof, and the length of the relatively short linear-shaped vent of the plurality of linear-shaped vents may be about 0.1 to 1 times the length of the relatively long linear-shaped vent thereof.

According to some embodiments, the vent is composed of a plurality of linear-shaped vents, and thicknesses of the cap plates in areas in which the plurality of linear-shaped vents are formed are formed different from each other.

According to some embodiments, the vent may be formed so that the thickness of the cap plate in an area in which a relatively short linear-shaped vent of the plurality of linear-shaped vents is formed is greater than a thickness of the cap plate in an area in which a relatively long linear-shaped vent of the plurality of linear-shaped vents is formed.

According to some embodiments, the vent may be composed of 1 to 4 linear-shaped vents.

According to some embodiments, the vent may be provided in the central area and the connection area of the cap plate and may have a spiral or pinwheel shape extending from the central area.

According to some embodiments, the vent may extend from a starting point in the central area to an end point in the connection area and may have a spiral shape in which a radius of a spiral line increases.

According to some embodiments, the thickness of the cap plate in the area in which the vent is formed may increase from the starting point to the end point.

According to some embodiments, the vent may have the pinwheel shape in which a plurality of circular arcs with constant radii are arranged at equal intervals based on a center of the cap plate.

### BRIEF DESCRIPTION OF DRAWINGS

FIG. 1 is a perspective view illustrating a cylindrical secondary battery according to some embodiments of the present disclosure.
FIG. 2 is a cross-sectional view illustrating the cylindrical secondary battery in FIG. 1 in the longitudinal direction according to some embodiments of the present disclosure.
FIG. 3 is a longitudinal cross-sectional view illustrating a cap plate portion in FIG. 2 according to some embodiments of the present disclosure.
FIG. 4 is a plan view illustrating an example of a cap plate in the cylindrical secondary battery in FIG. 1 according to some embodiments of the present disclosure.
FIG. 5 is a plan view illustrating another example of a cap plate in the cylindrical secondary battery in FIG. 1 according to some embodiments of the present disclosure.
FIG. 6 is a cross-sectional view illustrating an example of a cap plate for comparison of the thicknesses of the cap plate in an area in which a notch having a cross section taken along line A-A' is formed in the cylindrical secondary battery in FIG. 5 according to some embodiments of the present disclosure.
FIGS. 7 to 9 are plan views illustrating other examples of a cap plate in the cylindrical secondary battery in FIG. 1 according to some embodiments of the present disclosure.

### DETAILED DESCRIPTION

Aspects of some embodiments of the present disclosure are illustrated and described to more completely explain aspects of some embodiments of the present disclosure to those skilled in the art, and the following embodiments may be modified into various other forms, and the scope of the present invention is not limited to the following embodiments. The embodiments of the present disclosure are combinable. For example, a feature that is described with respect to only one embodiment may also be provided for another embodiment. Further, an embodiment may also include less features, or other features, than described. That is, not all the features of an embodiment need necessarily be present.

In addition, in the accompanying drawings, sizes (e.g., thicknesses of various components are exaggerated for brevity and clarity. Like numbers refer to like elements throughout. As used herein, the term "and/or" includes any and all combinations of one or more of the associated listed items. In addition, it will be understood that when element A is referred to as being "connected to" element B, element A can be directly connected to element B or intervening element C may be present therebetween such that element A and element B are indirectly connected to each other.

Terminology used herein is for the purpose of describing particular embodiments only and is not intended to be limit the present disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

Although the terms first, second, etc. are used herein to describe various members, elements, regions, layers and/or sections, it is obvious that these members, elements, regions, layers and/or sections should not be limited by these terms. These terms are only used to distinguish one member, element, region, layer and/or section from another member, element, region, layer and/or section. Thus, for example, a first member, a first element, a first region, a first layer and/or a first section discussed below could be named a second member, a second element, a second region, a second layer and/or a second section without departing from the teachings of the present disclosure.

Spatially relative terms, such as "beneath," "below," "lower," "above," "upper," and the like, are used herein for easy understanding of the relationship of one element or feature and another element or feature shown in the drawings. These spatially relative terms are provided for easy understanding of the present disclosure according to various process states or usage states of the present disclosure, and not intended to limit the present disclosure. For example, when a first element or feature in the drawings is turned over, the first elements described as "below" or "beneath" a second element or feature would then be "on" or "above" the second element or feature. Thus, the term "below" can encompass both "above" and "below."

Hereinafter, aspects of a cylindrical secondary battery 100 will be described in more detail with reference to the accompanying drawings.

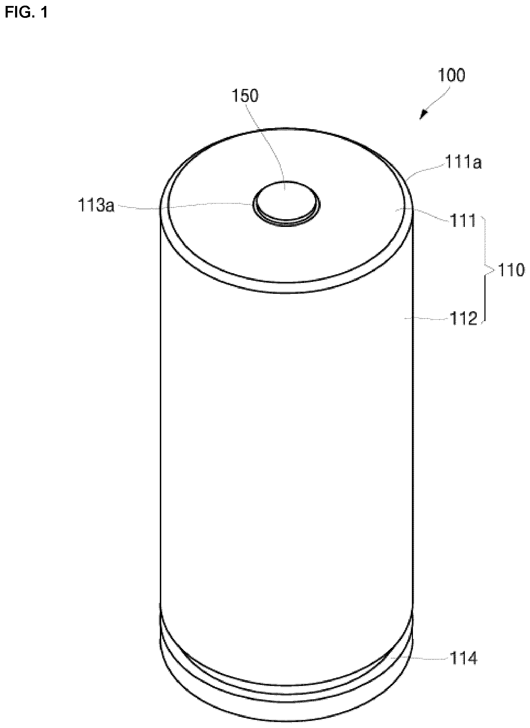

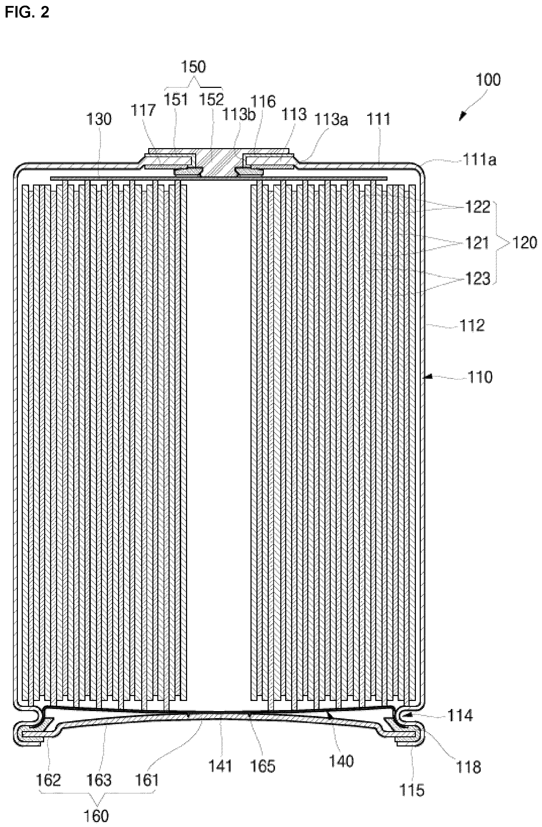

FIG. 1 is a perspective view illustrating a cylindrical secondary battery 100 according to some embodiments of the present disclosure. FIG. 2 is a cross-sectional view illustrating the cylindrical secondary battery 100 in FIG. 1 in the longitudinal direction.

As illustrated in FIGS. 1 and 2, the cylindrical secondary battery 100 according to some embodiments of the present disclosure includes a case 110, an electrode assembly 120 accommodated in the case 110, may include a terminal 150 coupled to a terminal hole provided in one end of the case 110, and includes a cap plate 160 which may seal or enclose an opening in the other end of the case 110.

The case 110 includes a circular upper surface portion 111 and a side surface portion 112 extending downward from the edge of the upper surface portion 111 to a certain length. The upper surface portion 111 and the side surface portion 112 of the case 110 may be formed integrally. Additionally, a bent portion 111a bent in a round shape may be further included between the upper surface portion 111 and the side surface portion 112.

The circular upper surface portion 111 has a flat circular plate shape, and a central portion 113 may protrude in an outward direction away from the electrode assembly 120. The central portion 113 may be located at the center of the upper surface portion 111 and is located further outside the case 110 compared to the upper surface portion 111 such that a step may be formed between the central portion 113 and the upper surface portion 111. A connection portion 113a connecting an outer edge of the central portion 113 and an inner edge of the upper surface portion 111 may be further included. The connection portion 113a may be provided to be inclined due to the step formed between the central portion 113 and the upper surface portion 111. Here, when a planar shape of the central portion 113 is circular, the connection portion 113a may connect the central portion 113 and the upper surface portion 111 in a circular ring shape.

The central portion 113 may have a terminal hole 113b passing through approximately the center thereof. The terminal 150 may be insertion-coupled to the terminal hole 113b of the central portion 113. The terminal hole 113b may have a circular shape, but is not limited thereto.

Additionally, a planar shape of a fastening portion 152 of the terminal 150 may correspond to the shape of a terminal hole 113b. That is, when the terminal hole 113b is circular, the fastening portion 152 of the terminal 150 may have a cylindrical shape. Therefore, when the terminal hole 113b is circular, no separate corners are provided, and thus the terminal hole 113b can be fastened and coupled with the terminal 150 regardless of an angle.

A first gasket 116 for sealing and electrical insulation may be further interposed between the terminal hole 113b and the terminal 150. Therefore, according to some embodiments, a flat outer diameter of the fastening portion 152 of the terminal 150 may be smaller than that of the terminal hole 113b. The first gasket 116 blocks the terminal 150 from being in contact with the case 110 so that the case 110 and the terminal 150 are electrically separated. The first gasket 116 may seal the terminal hole 113b of the central portion 113 of the case 110. The first gasket 116 may be made of a resin material such as polyethylene (PE), polypropylene (PP), or polyethylene terephthalate (PET).

Additionally, the case 110 may further include an inner insulating member 117 provided to cover an inner surface of the central portion 113. Here, the inner insulating member 117 may be attached to the inner surface of the central portion 113 by coating or an adhesive. Here, the inner surface of the central portion 113 is a surface facing the upper surface of a first current collector 130 interposed between the case 110 and the electrode assembly 120 and may be a lower surface of the central portion 113. The inner insulating member 117 can prevent or reduce contact between the central portion 113 of the case 110 and a first electrode plate 121 of the electrode assembly 120. For example, the inner insulating member 117 can prevent or reduce contact between the case 110 and the first current collector 130.

In the case 110, the central portion 113 protrudes in the outward direction, thereby reducing a separation distance between the upper surface portion 111 and the first current collector 130, which reduces the loss of internal space of the case 110. That is, because the case 110 can reduce the separation distance between the upper surface portion 111 and the first current collector 130, it may be desirable for the inner insulating member 117 to cover the inner surface of the upper surface portion 111 or the inner surface of the upper surface portion 111 and a bent portion 111b, rather than when the inner insulating member 117 is located only inside the central portion 113.

Meanwhile, the lower portion of the case 110 of the cylindrical secondary battery 100 is open during the manufacturing process. Accordingly, during the manufacturing process of the cylindrical secondary battery 100, the electrode assembly 120 may be placed into the case 110 through the open lower portion of the case 110 along with an electrolyte. In this case, the electrolyte and the electrode assembly 120 may be placed into the case 110 while the open lower portion faces upward. In the case 110, after the electrolyte and the electrode assembly 120 are placed, the cap plate 160 is coupled to the open lower portion to seal the inside of the case 110. Here, the electrolyte serves to allow lithium ions to move between the first electrode plate 121 and a second electrode plate 122 that constitute the electrode assembly 120. Such electrolyte may be a non-aqueous organic electrolyte that is a mixture of a lithium salt and high purity organic solvent. In addition, the electrolyte may be a polymer electrolyte using a polymer or a solid electrolyte, and the type of electrolyte is not limited thereto.

The case 110 may be made of steel, a steel alloy, aluminum, an aluminum alloy, or equivalents thereof, but the material is not limited thereto. In addition, in the case 110, an inwardly recessed beading part 114 is formed in an upper portion centered on the cap plate 160 to prevent or reduce instances of the electrode assembly 120 being separated to the outside, and an inwardly bent crimping part 115 may be formed under the beading part 114.

After the electrode assembly 120 is inserted into the case 110 through the open lower portion, the beading part 114 is formed to prevent or reduce separation between the electrode assembly 120 and the case 110.

The electrode assembly 120 includes the first electrode plate 121, the second electrode plate 122, and a separator 123. The first electrode plate 121 may be a positive electrode plate, and the second electrode plate 122 may be a negative electrode plate. Of course, the opposite is also possible. Hereinafter, for convenience of explanation, the case where the first electrode plate 121 is the positive electrode plate and the second electrode plate 122 is the negative electrode plate will be described.

The first electrode plate 121 is a plate-shaped metal foil made of aluminum (Al), of which at least one side is coated with a positive electrode active material made of a transition metal oxide. Additionally, the first electrode plate 121 may be provided with a positive electrode uncoated portion that is not coated with the positive electrode active material at an upper end portion thereof. This positive electrode uncoated portion may protrude upward from the electrode assembly 120. That is, the positive electrode uncoated portion of the first electrode plate 121 may protrude further upward compared to the second electrode plate 122 and the separator 123.

The second electrode plate 122 is a plate-shaped metal foil made of copper (Cu) or nickel (Ni), of which at least one side is coated with a negative electrode active material such as graphite or carbon. Additionally, the second electrode plate 122 may have a negative electrode uncoated portion that is not coated with the negative electrode active material at a lower end portion thereof. This negative electrode uncoated portion may protrude downward from the electrode assembly 120. That is, the negative electrode uncoated portion of the second electrode plate 122 may protrude further downward compared to the first electrode plate 121 and the separator 123.

The separator 123 may be polyethylene (PE) or polypropylene (PP), but embodiments according to the present disclosure are not limited thereto. The separator prevents or reduces instances of an electrical short between the first electrode plate 121 and the second electrode plate 122 and may only allow the movement of lithium ions.

After the first electrode plate 121, the second electrode plate 122, and the separator 123 are stacked, the electrode assembly 120 is wound from a winding start end and wound into an approximately cylindrical shape. Additionally, in the electrode assembly 120, the positive electrode uncoated portion that is not coated with the positive electrode active material may protrude upward from the first electrode plate 121, the negative electrode uncoated portion that is not coated with the negative electrode active material may protrude downward from the second electrode plate 122. Additionally, in the electrode assembly 120, the outermost portion of the positive electrode uncoated portion may not protrude upward, and the outermost portion of the negative electrode uncoated portion may not protrude downward. That is, the electrode assembly 120 may be provided with a concave step at the outermost portions of the upper and lower portions compared to other areas. In this electrode assembly 120, contact between the electrode assembly 120 and the case 110 can be prevented or reduced when the inner insulating member 117 is not formed in the bent portion 111b of the case 110.

The first current collector 130 may be a circular metal plate of which a shape corresponds to an upper surface of the electrode assembly 120. The planar size of the first current collector 130 may be smaller than or equal to the size of the upper surface of the electrode assembly 120. The first current collector 130 may be made of aluminum (Al). The first current collector 130 may be fixed and electrically connected to the first electrode plate 121 exposed upward at the electrode assembly 120 by welding while the lower surface thereof is in contact with the upper surface of the electrode assembly 120. The first current collector 130 may be fixed and electrically connected to the terminal 150 by welding while an upper surface thereof is in contact with a lower surface of the terminal 150. The first current collector 130 may be a path for current flow between the first electrode plate 121 of the electrode assembly 120 and the terminal 150. The first current collector 130 may be welded to the electrode assembly 120, accommodated in the case 110, and then welded to the terminal 150.

A second current collector 140 may have a circular shape corresponding to a lower surface of the electrode assembly 120. An upper surface of the second current collector 140 may be in contact with the lower surface of the electrode assembly 120. The second current collector 140 is fixed and electrically connected to the second electrode plate 122 exposed downward at the electrode assembly 120 by welding while the upper surface thereof is in contact with the lower surface of the electrode assembly 120. Additionally, the second current collector 140 may be brought into contact with and coupled to an inner surface of the beading part 114. Here, the inner surface may be an inner surface of the case 110. The second current collector 140b may be a path for current flow between the second electrode plate 122 of the electrode assembly 120 and the case 110. That is, the case 110 may be a negative terminal. In addition, the second current collector 140 may be provided with a through hole 141, which passes through between the upper surface and the lower surface, at the center thereof, and the electrolyte may be easily injected into the electrode assembly 120 through the through hole 141. According to some embodiments, the size (diameter) of the through hole 141 may correspond to a core diameter of the electrode assembly 120.

The terminal 150 may be inserted into the terminal hole 113b of the case 110 and electrically connected to the first current collector 130. The terminal 150 may be electrically connected to the first electrode plate 121 of the electrode assembly through the first current collector 130. That is, the terminal 150 may be a positive terminal. The terminal 150 and the case 110 may have different polarities. The terminal 150 may be formed of a material that is the same as or similar to that of each of the first current collector 130 and the first electrode plate 121.

The terminal 150 may include a head 151 exposed upward at the case 110 and a fastening portion 152 extending inward of the case 110 from a center of the head 151. A planar size of the head 151 may be larger than a planar size of the fastening portion 152. That is, the diameter of the head 151 may be larger than the diameter of the fastening portion 152. The upper end of the fastening portion 152 of the terminal 150 may be connected to a lower surface of the head 151, and the head 151 and the fastening portion 152 may be formed integrally. The terminal 150 may be coupled to the terminal hole 113b of the case 110 in a direction from the outside to the inside. In this case, the first gasket 116 may be interposed between the terminal 150 and the case 110.

The terminal 150 may be inserted into the terminal hole 113b of the case 110 in a direction from the outside to the inside and then fixed. In this case, the terminal 150 may be fixed by a coupling part made of an insulating material, but is not limited thereto. Additionally, a lower surface of the fastening portion 152 may be while in contact with and coupled to an upper surface of the first current collector 130 by welding. The fastening portion 152 may protrude further downward compared to a lower surface of the central portion 113 of the case 110. In addition, because the upper surface of the first current collector 130 is coupled to the lower surface of the terminal 150, which is the lower surface of the fastening portion 152, the fastening portion 152 may be interposed between the central portion 113 and the first current collector 130.

The first gasket 116 is interposed between the fastening portion 152 and the terminal hole 113b of the case 110, and an upper end portion thereof may extend between the head 151 and the central portion 113 of the case 110. In this case, the upper end portion of the first gasket 116 may be extended more than the head 151. That is, the first gasket 116 is interposed between the lower surface of the head of the terminal 150 and an upper surface of the central portion 113 of the case 110 and between the fastening portion 152 of the terminal 150 and the terminal hole 113b of the case 110, thereby electrically insulating and sealing between the terminal 150 and the case 110. The first gasket 116 is shown as an integrated structure, but a component interposed between the lower surface of the head of the terminal 150 and the upper surface of the central portion 113 of the case 110 and a component interposed between the fastening portion 152 of the terminal 150 and the terminal hole 113b of the case 110 may be separate components. The first gasket 116 may be in contact with the upper and lower surfaces of the central portion 113 of the case 110. The first gasket 116 may be in contact with the inner insulating member 117.

The cap plate 160 may be a circular metal plate and coupled to a lower end portion of the case 110. A lower surface of the cap plate 160 may be exposed to the outside. The cap plate 160 is coupled to the lower end portion of the case 110 with a second gasket 118 interposed therebetween, thereby preventing or reducing instances of the cap plate 160 being electrically connected to the case 110. Because the cap plate 160 is not electrically connected to the positive or negative electrode of the electrode assembly 120, it may not have a separate electrical polarity.

An edge area 162 of the cap plate 160 may be fixedly positioned between the beading part 114 and the crimping part 115 of the case 110. In more detail, in a state in which the second gasket 118 is positioned under the beading part 114 of the case 110, the cap plate 160 may be mounted below the beading part 114. Afterward, the crimping part 115 of the case 110 is bent in an inward direction of the cap plate 160 and presses the second gasket 118 to couple the cap plate 160 and the case 110. The second gasket 118 may be made of a resin material such as polyethylene (PE), polypropylene (PP), or polyethylene terephthalate (PET). The second gasket 118 may press and seal a space between the case 110 and the cap plate 160, and may prevent or reduce instances of the cap plate 160 being separated from the case 110. An upper portion of the second gasket 118 may be interposed between the beading part 114 and the cap plate 160, and the lower portion may be interposed between the crimping part 115 and the cap plate 160. The lower end portion of the second gasket 118 may protrude more toward the center of the cap plate 160 than the crimping part 115.

The cap plate 160 may include a central area 161 positioned below the through hole 141 of the second current collector 140 and the edge area 162 interposed between the beading part 114 and the crimping part 115 of the case 110 and coupled to the case 110. Additionally, the central area 161 of the cap plate 160 may be in contact with or connected to the second current collector 140. That is, an upper surface of the cap plate 160 may be in contact with a lower surface of the second current collector 140. Accordingly, the cap plate 160 may be formed so that the central area 161 is curved toward the electrode assembly 120 compared to the edge area 162. Additionally, the cap plate 160 further includes a connection area 163 connecting the central area 161 and the edge area 162. According to some embodiments, the central area 161 and the connection area 163 may be concave toward the inside of the case 110 compared to the edge area 162. That is, the edge area 162 of the cap plate 160 may protrude more outward from the case 110 than the central area 161 and the connection area 163. Additionally, the connection area 163 and the edge area 162 may be connected to be inclined due to a step.

The cap plate 160 is provided with a vent 165 that opens at a set pressure. The vent 165 is provided in the central area 161 or the connection area 163 of the cap plate 160 or in both. That is, the vent 165 may be provided in both the central area 161 and the connection area 163. An area of the cap plate 160 in which the vent 165 is formed may be thinner than other areas of the cap plate 160. The vent 165 may be (or have) a notch formed in the direction from the top to the bottom of the cap plate 160. That is, the vent 165 is formed in an inner surface of the cap plate 160, and the notch cannot be visible from the outside.

That is, when excessive internal pressure occurs inside the case 110 of the cylindrical secondary battery 100, the vent 165 ruptures, thereby enabling excessive internal pressure to be discharged. The vent 165 of the cap plate 160 may be spaced apart from the center of the cap plate 160 and formed to have a ring shape in a plan view. As another example, the vent 165 may have at least one pattern having a linear or curved shape in a plan view. In the area in which the vent 165 is formed, the thickness of the cap plate 160 may be smaller than the thickness of other areas of the cap plate 160.

In the area in which the vent 165 is formed, the thickness of the cap plate 160 may be 0.1 to 0.3 times the thickness of the material of the cap plate 160. In this case, a cell rupture pressure range may be 17 to 35 kgf/cm². When the thickness of the cap plate 160 in the area in which the vent 165 is formed is 0.1 times or more the material thickness of the cap plate 160, it may be easy to perform notch processing or a press process on the cap plate 160. Additionally, when the thickness of the cap plate 160 in the area in which the vent 165 is formed is less than 0.1 times the material thickness of the cap plate 160, deformation or cracks may occur even when the internal pressure of the cylindrical secondary battery 100 does not increase. In addition, when the thickness of the cap plate 160 in the area where the vent 165 is formed exceeds 0.3 times the material thickness of the cap plate 160, the vent 165 may not rupture even when the internal pressure of the cylindrical secondary battery 100 increases and may not operate as a vent. Additionally, when the thickness of the cap plate 160 in the area in which the vent 165 is formed is 0.3 times or less the material thickness of the cap plate 160, the cap plate 160 may rupture at a desired rupture pressure.

Meanwhile, the cylindrical secondary battery 100 should be tested according to standard specifications to minimize or reduce risks that may occur during transportation by air, land, or ship. This test may include tests for altitude, thermal shock, vibrations, impacts, external short circuits, compression/collisions, forced discharge and overcharging. Among them, in the forced discharge test, an external power supply may be connected to a fully discharged battery to cause over-discharge and induce the reverse polarity of the battery. In this case, the voltage falls below 0 V and becomes negative. That is, the battery is damaged, no longer provides a voltage, and acts as a resistor, causing a voltage drop. This may cause the battery to heat up and cause a fire or spark. The forced discharge test verifies the safety of the battery design at the limits of an appropriate discharge current specification. When the current limit is too high, resulting increase in heat may lead to battery overheating and eventually thermal runaway (fire and/or explosion).

However, the cylindrical secondary battery 100 without a CID does not have a heat reduction function using a cut-off, and when a cell size (total area or diameter) is large, heat may not be dissipated. Additionally, when the cylindrical secondary battery 100 has a large core size (diameter), a failure (no good (NG)) may occur due to core deformation during venting.

That is, the cylindrical secondary battery 100 should be formed in a structure that can suppress heat generation and prevent or reduce ignition because ignition may occur during forced discharge evaluation. Therefore, the cylindrical secondary battery 100 may be formed in a structure that can reduce internal shorts through venting delay and mild venting under evaluation conditions that can minimize or reduce an applied current. Mild venting may mean a gradual decrease of pressure.

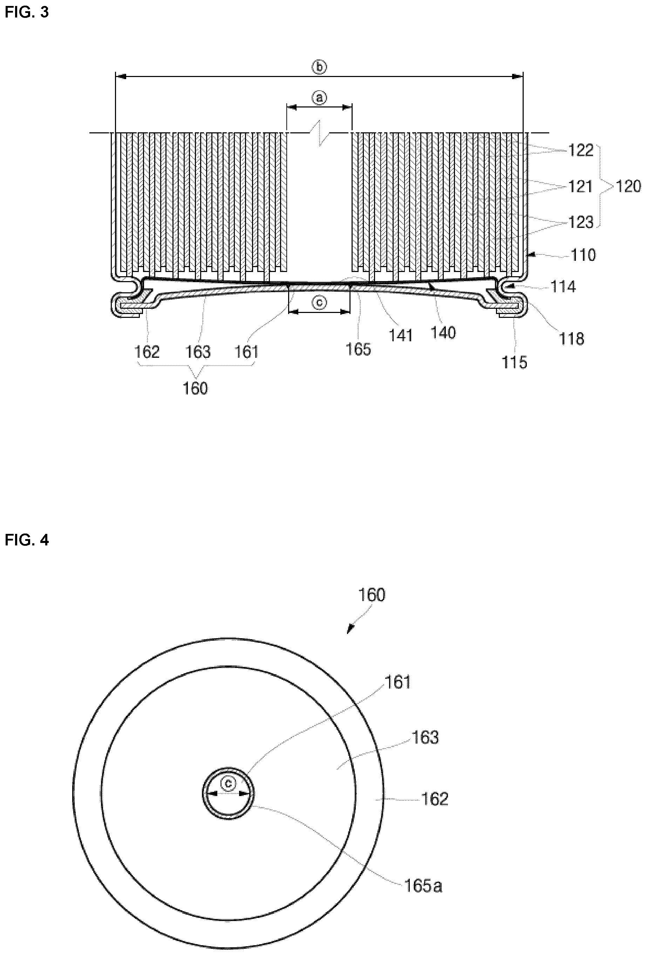

Hereinafter, with reference to FIGS. 3 and 4, the structure for minimizing or reducing internal deformation during venting and a vent shape formed to reduce the size of the vent compared to alternative vents to delay venting and make venting milder will be described in more detail.

FIG. 3 is a longitudinal cross-sectional view illustrating a cap plate portion in FIG. 2, and FIG. 4 is a plan view illustrating an example of a cap plate in the cylindrical secondary battery in FIG. 1.

As shown in FIG. 3, the cylindrical secondary battery 100 is designed to have a smaller core diameter a of the electrode assembly 120 than a core diameter of an alternative system so that internal deformation during venting can be minimized or reduced. For example, the core diameter a of the electrode assembly 120 may be in a range of 5% to 15% of an inner diameter b of the case 110.

Referring to FIG. 4, a vent 165a may be provided in the central area 161 of the cap plate 160. In this case, the central area 161 may be a circular (in a plan view) area with a size corresponding to the core diameter of the electrode assembly 120 from the center of the cap plate 160. Additionally, the vent 165a may correspond to the circular central area 161 and have a circular ring shape formed along the circumference of the central area 161 in a plan view. The area of the ring-shaped vent 165a may be determined based on the core diameter a of the electrode assembly 120. That is, an inner diameter c of the ring shape of the vent 165a may vary in proportion to the core diameter a of the electrode assembly 120. For example, the inner diameter c of the ring shape of the vent 165a may be 0.5 to 1 times the core diameter a of the electrode assembly 120. Also, according to some embodiments, the vent 165a may be located in the connection area 163 of the cap plate 160 or in both the connection area 163 and the central area 161. In this case, the inner diameter c of the ring shape of the vent 165a may be, for example, 0.5 to 5.5 times the core diameter a of the electrode assembly 120.

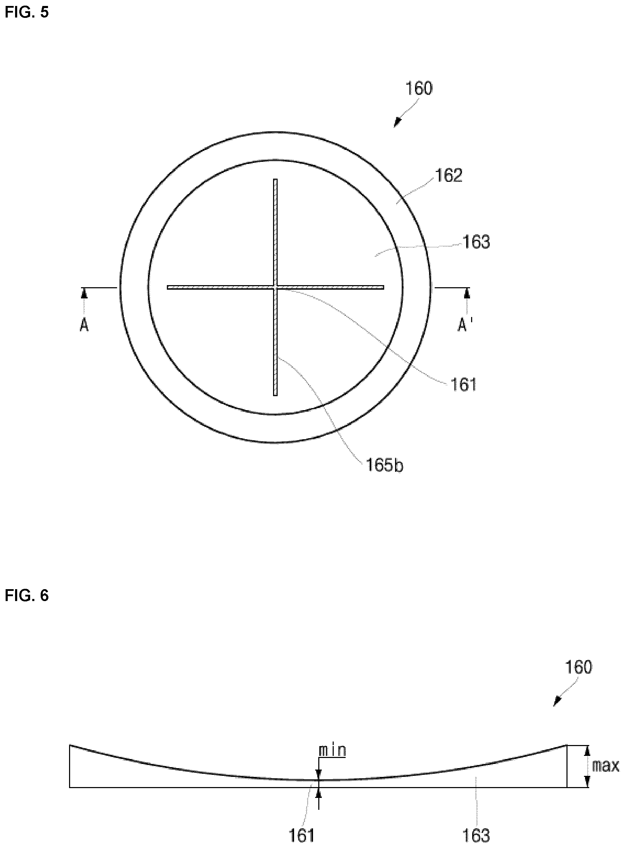

As another example, the vent 165 may have at least one pattern having a linear or curved shape in a plan view. Hereinafter, with reference to FIGS. 5 to 9, various shapes of the vent for delaying venting and mild venting will be described.

FIG. 5 is a plan view illustrating another example of a cap plate in the cylindrical secondary battery in FIG. 1, and FIG. 6 is a cross-sectional view illustrating an example of a cap plate for comparison of the thickness of the cap plate in an area in which a notch having a cross section taken along line A-A' is formed in the cylindrical secondary battery in FIG. 5, and FIGS. 7 to 9 are plan views illustrating other examples of a cap plate in the cylindrical secondary battery in FIG. 1.

Referring to FIG. 5, a vent 165b may have a cross shape extending from the center of the cap plate 160 toward the connection area 163 in a plan view. In this case, the thickness of the cap plate 160 may be the same in the area in which the vent 165b is formed. In the area in which the vent 165b is formed, the thickness of the cap plate 160 may be 0.1 to 0.3 times the thickness of the material of the cap plate 160. In this case, the cell rupture pressure range may be 17 to 35 kgf/cm².

According to some embodiments, as shown in FIG. 6, the thickness of the cap plate 160 in the area in which the notch is formed may increase in an extending direction of the vent 165b from the center thereof. That is, the thickness of the cap plate 160 in the area in which the notch is formed may be small so that a portion corresponding to the central area 161 may be easily vented, and the thickness of the cap plate 160 in the area in which the notch may be formed may be increased as the distance from the central area 161 increases. For example, the largest thickness of the cap plate 160 in the area in which the vent 165b is formed may be 0.25 to 0.3 times the thickness of the material of the cap plate 160. In this case, the cell rupture pressure may be 35 kgf/cm². Additionally, the smallest thickness of the cap plate 160 in the area in which the vent 165b is formed may be 0.1 to 0.15 times the thickness of the material of the cap plate 160. In this case, the cell rupture pressure may be 17 kgf/cm². Meanwhile, although description has been made based on the cross-shaped vent 165b, in the case of the circular-shaped vent 165a described above, a linear-shaped vent 165c, a spiral-shaped vent 165d, and a pinwheel-shaped vent 165e described below, as shown in FIG. 6, the thickness of the cap plate 160 in the area in which the notch is formed may increase from one side to the other side.

As shown in FIG. 5, the vent 165b may be provided in the central area 161 and the connection area 163 of the cap plate 160. In this case, the length of each of a horizontal line and a vertical line of the cross-shaped vent 165b may be 0.5 to 5.5 times the core diameter a of the electrode assembly 120. The vent 165b may be provided only within the central area 161. In this case, the length of the horizontal line and the vertical line of the cross-shaped vent 165b may be 0.5 to 1 times the core diameter a of the electrode assembly 120.

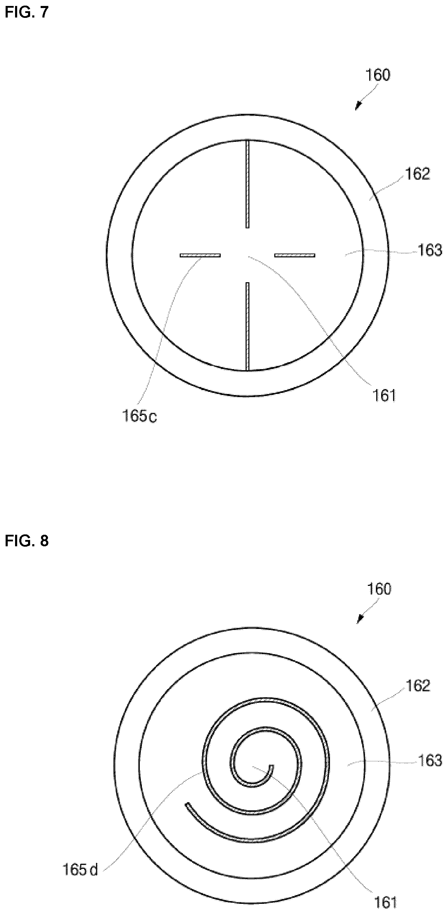

Referring to FIG. 7, the vent 165c may have a linear shape extending from the central area 161 in a plan view. The linear-shaped vent 165c may be located in the connection area 163. The linear-shaped vent 165c may have four vents spaced apart from each other based on the central area 161, as shown in FIG. 7. However, the vent is not limited thereto and may be formed of a plurality of vents, but according to some embodiments, it is described as having1 to 4 vents. For example, when there is one linear-shaped vent 165c, the vent 165c may be formed in a linear line without any spaced portion. In addition, when there are two linear-shaped vents 165c, the two vents 165c may be formed in linear lines spaced apart from each other based on the central area 161. In addition, when there are three linear-shaped vents 165c, the three vents 165c may be formed into linear vents spaced apart from each other. Alternatively, when there are three linear-shaped vents 165c, the three vents 165c may be formed into three linear lines spaced apart from each other based on the central area 161 and the spacing between the linear lines is uniform.

Meanwhile, in the linear-shaped vent 165c, a rupture may occur in at least one of the plurality of vents. In this case, in order to minimize or reduce internal deformation of a cell due to venting, it may be advantageous to have fewer venting locations. Additionally, when there are two or more linear-shaped vents 165c, the spacing between the vents may be the same. Also, according to some embodiments, it may be advantageous when a notch shape is not the same to minimize or reduce a venting area when the vent 165c ruptures. Therefore, when there are two or more linear-shaped vents 165c, the lengths of the linear-shaped vents 165c may be different. For example, the length of a long portion (i.e., a relatively long linear-shaped vent) may be about 1 to 10 times the length of a relatively short portion (i.e., a relatively short linear-shaped vent). Additionally, the length of the short portion (i.e., a relatively short linear-shaped vent) may be about 0.1 to 1 times the length of the relatively long portion (i.e., a relatively long linear-shaped vent). When a difference in length is less than 0.1 times or more than 10 times, implementation of the cap plate 160 may be difficult.

Additionally, when the linear-shaped vent 165c has two or more linear lines, the thickness of the cap plate 160 in the area in which the vent 165c is formed may be different. In this case, the thickness of the cap plate 160 in the area in which the vent 165c is formed may be 0.1 to 0.3 times the material thickness of the cap plate 160. In this case, the cell rupture pressure range may be 17 to 35 kgf/cm². For example, the thickness of the cap plate 160 in the area in which a relatively long linear portion (i.e., a long linear-shaped vent) of the vent 165c is formed may be relatively small (e.g., may be about 0.1 times the thickness of the cap plate material). Additionally, the thickness of the cap plate 160 in the area in which a relatively short linear portion (i.e., a short linear-shaped vent) of the vent 165c is formed may be relatively large (e.g., may be about 0.3 times the thickness of the cap plate material). That is, a notch depth may be increased for the relatively long linear part to be easily vented, and the notch depth may be decreased for the relatively short linear part.

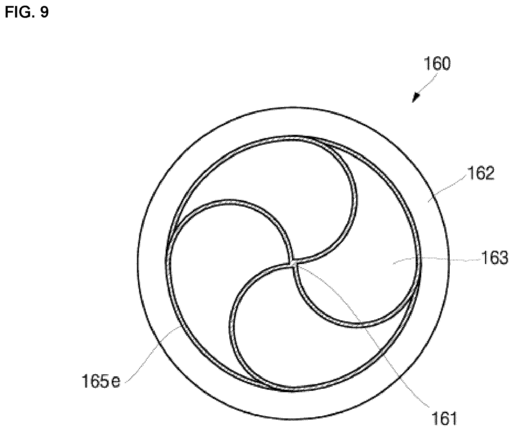

Referring to FIGS. 8 and 9, the vents 165d and 165e may have a spiral shape and a pinwheel shape extending from the central area 161 respectively in a plan view. The vents 165d and 165e may be located in both the connection area 163 and the central area 161 of the cap plate 160. In this case, adistance from a start point to an end point of each of the spiral and pinwheel-shaped vents 165d and 165e may be 0.5 to 5.5 times the core diameter a of the electrode assembly 120.

As shown in FIG. 8, the spiral-shaped vent 165d may have a spiral shape extending from a start point in the central area 161 to an end point in the connection area 163. That is, the spiral-shaped vent 165d may have a shape in which the radius of a spiral line increases in a plan view. In this case, the thickness of the cap plate 160 may be uniform in the area in which the spiral-shaped vent 165d is formed. As described above, the thickness of the cap plate 160 in the area in which the vent 165d is formed may be 0.1 to 0.3 times the thickness of the material of the cap plate 160. In this case, the cell rupture pressure range may be 17 to 35 kgf/cm².

According to some embodiments, the thickness of the cap plate 160 in the area in which the spiral-shaped vent 165d is formed may increase in an extending direction from the center thereof. Therefore, by varying the thickness of the cap plate 160 in the area in which the vent 165d is formed for each location, the venting area may be adjusted when a problem occurs inside the cell. In the area in which the spiral-shaped vent 165d is formed, the thickest thickness of the cap plate 160 may be 0.3 times the material thickness of the cap plate 160. In this case, the cell rupture pressure range may be 35 kgf/cm². Additionally, the thinnest thickness of the cap plate 160 in the area in which the spiral-shaped vent 165d is formed may be 0.1 times the material thickness of the cap plate 160. In this case, the cell rupture pressure range may be 17 kgf/cm2

According to some embodiments, as shown in FIG. 9, the vent 165e may have a pinwheel shape in which a plurality of circular arcs with the same radius are arranged at equal intervals based on the center of the central axis (rotation axis) within the circular vent. In the area in which the pinwheel-shaped vent 165e is formed, a thickness of the cap plate 160 may increase in an extending direction from the center. That is, when the internal pressure increases after venting along the initial arc of the pinwheel-shaped vent 165e, the entire vent 165e including an extended portion of a circular vent 165e formed along the planar perimeter of the cap plate 160 may be vented. In an area in which the pinwheel-shaped vent 165e is formed, the thickest thickness of the cap plate 160 may be 0.25 to 0.3 times the material thickness of the cap plate 160. In this case, the cell rupture pressure may be 35 kgf/cm². In addition, the smallest thickness of the cap plate 160 in the area in which the pinwheel-shaped vent 165e is formed may be 0.1 to 0.15 times the material thickness of the cap plate 160. In this case, the cell rupture pressure may be 17 kgf/cm².

In a cylindrical secondary battery according to some embodiments of the present disclosure, a vent and jelly roll structure is designed to satisfy a forced discharge item of the standard specifications to suppress heat generation and prevent or reduce ignition during forced discharge evaluation.

In addition, in a cylindrical secondary battery according to some embodiments of the present disclosure, heat generation can be suppressed by forming a vent structure in which pressure is gradually released so that venting proceeds gradually.

In addition, in a cylindrical secondary battery according to some embodiments of the present disclosure, a vent structure is formed to increase a vent rupture pressure and reduces a diameter of a jelly roll core to minimize or reduce the internal deformation of a cell during venting.

In addition, because a cylindrical secondary battery according to some embodiments of the present disclosure is provided with both a negative electrode and a positive electrode at one side, when a plurality of cylindrical secondary batteries are electrically connected through a bus bar, the bus bar connection structure can be simplified by allowing connection only at the one side.

According to an aspect, a cylindrical secondary battery (100) comprises an electrode assembly (120); a case (110) of which a lower end is open to accommodate the electrode assembly (120); and a cap plate (160) coupled to the lower end of the case (110), wherein the cap plate (160) includes a connection area (163) connecting a central area (161) and an edge area (162), and a vent (165, 165a, 165b, 165c, 165d, 165e) is located in at least one of the central area (161) and/or the connection area (163) and has a smaller thickness than other areas.

According to an aspect, the vent (165, 165a, 165b, 165c, 165d, 165e) is provided in the connection area (163) and has at least one linear shape extending from the central area (161).

According to an aspect, the vent (165, 165a, 165b, 165c, 165d, 165e) comprises 1 to 4 linear shapes.

According to an aspect, the vent (165, 165a, 165b, 165c, 165d, 165e) is in the central area (161) and the connection area (163) of the cap plate (160) and includes a spiral or pinwheel shape extending from the central area (161).

According to an aspect, the vent (165, 165a, 165b, 165c, 165d, 165e) extends from a starting point in the central area (161) to an end point in the connection area (163) and has a spiral shape in which a radius of the spiral increases.

According to an aspect, the thickness of the cap plate (160) in an area in which the vent (165, 165a, 165b, 165c, 165d, 165e) is formed increases from the starting point to the end point in a tapered shape.

According to an aspect, the vent (165, 165a, 165b, 165c, 165d, 165e) has the pinwheel shape in which a plurality of circular arcs with constant radii are arranged at equal intervals based on a center of the cap plate (160).

While the foregoing embodiments are only embodiments for carrying out the present disclosure, which is not limited to the disclosed embodiments, it will be understood by a person skilled in the art that various changes in form and details may be made therein without departing from the scope of the present disclosure as defined by the following claims.

## Claims

1. A cylindrical secondary battery (100) comprising:
an electrode assembly (120);
a case (110) of which a lower end is open to accommodate the electrode assembly (120); and
a cap plate (160) coupled to the lower end of the case (110),
wherein the cap plate (160) includes a central area (161), an edge area (162) and a connection area (163) connecting the central area (161) and an edge area (162), a vent (165, 165a, 165b, 165c, 165d, 165e) is located in at least one of the central area (161) and the connection area (163) and an area of the cap plate (160) in which the vent (165, 165a, 165b, 165c, 165d, 165e) is formed has a smaller thickness than other areas of the cap plate (160).

2. The cylindrical secondary battery (100) of claim 1, wherein the cap plate (160) is formed in a shape in which the central area (161) is curved toward the electrode assembly (120) compared to the edge area (162).

3. The cylindrical secondary battery (100) of claim 2, wherein the central area (161) and the connection area (163) of the cap plate (160) are formed concavely toward an inside of the case (110) compared to the edge area (162).

4. The cylindrical secondary battery (100) of any one of the preceding claims, wherein the vent (165, 165a, 165b, 165c, 165d, 165e) has a notch formed in an inner surface of the cap plate (160).

5. The cylindrical secondary battery (100) of any one of the preceding claims, wherein a thickness of the cap plate (160) in the area in which the vent (165, 165a, 165b, 165c, 165d, 165e) is formed is in a range of 0.1 to 0.3 times a thickness of a material of the cap plate (160).

6. The cylindrical secondary battery (100) of any one of the preceding claims, wherein the vent (165, 165a, 165b, 165c, 165d, 165e) is provided in the central area (161) of the cap plate (160) and has a circular ring shape continuously formed along a circumference of the central area (161) of the cap plate (160).

7. The cylindrical secondary battery (100) of claim 6, wherein an inner diameter of the vent (165, 165a, 165b, 165c, 165d, 165e) is in a range of 0.5 to 1 times a core diameter of the electrode assembly (120).

8. The cylindrical secondary battery (100) of any one of claims 1 to 5, wherein the vent (165, 165a, 165b, 165c, 165d, 165e) is provided in the central area (161) and the connection area (163) of the cap plate (160) and has a cross shape extending from a center of the cap plate (160) toward the connection area (163).

9. The cylindrical secondary battery (100) of claim 8, wherein a length of each of a horizontal line and a vertical line of the vent (165, 165a, 165b, 165c, 165d, 165e) is in a range of 0.5 to 5.5 times a core diameter of the electrode assembly (120).

10. The cylindrical secondary battery (100) of any one of claims 1 to 5, wherein the vent (165, 165a, 165b, 165c, 165d, 165e) is provided in the connection area (163) and has at least one linear shape extending from the central area (161).

11. The cylindrical secondary battery (100) of claim 10, wherein the vent (165, 165a, 165b, 165c, 165d, 165e) comprises a plurality of linear-shaped vents spaced apart from each other based on the central area (161).

12. The cylindrical secondary battery (100) of claim 10, wherein the vent (165, 165a, 165b, 165c, 165d, 165e) comprises a plurality of linear-shaped vents, and lengths of the pluralith of linear-shaped vents are different from each other.

13. The cylindrical secondary battery (100) of claim 12, wherein a length of a relatively long linear-shaped vent of the plurality of linear-shaped vents is in a range of 1 to 10 times a length of a relatively short linear-shaped vent thereof,
wherein the length of the relatively short linear-shaped vent of the plurality of linear-shaped vents is in a range of 0.1 to 1 times the length of the relatively long linear-shaped vent thereof.

14. The cylindrical secondary battery (100) of claim 10, wherein the vent (165, 165a, 165b, 165c, 165d, 165e) comprises a plurality of linear-shaped vents, and thicknesses of the cap plates (160) in areas in which the plurality of linear-shaped vents are formed are different from each other.

15. The cylindrical secondary battery (100) of claim 14, wherein the vent (165, 165a, 165b, 165c, 165d, 165e) is formed so that a thickness of the cap plate (160) in an area in which a short linear-shaped vent of the plurality of linear-shaped vents is formed is greater than a thickness of the cap plate (160) in an area in which a long linear-shaped vent of the plurality of linear-shaped vents is formed.
